# DEMANDE DE BREVET EUROPEEN

(11) **EP 0 730 109 A1**
(43) Date de publication de la demande: **04.09.1996**
(21) Numéro de dépôt: 96400437.8
(22) Date de dépôt: 01.03.1996
(51) Int. Cl.: F16H 48/08, B60K 17/16

(54) **Mécanisme de transmission différentiel**

(30) Priorité: 03.03.1995 FR 9502497
(71) Demandeur: Société Anonyme dite: REGIE NATIONALE DES USINES RENAULT, F-92109 Boulogne Billancourt (FR)
(72) Inventeur: Raoul, Michel, 78990 Elancourt (FR); Prenel, Jean-Marc, 78730 Saint-Arnoult-en Yvelines (FR)

(57) **Abrégé**

Mécanisme de transmission différentiel (3) comportant à l'intérieur d'un carter de transmission (4) une couronne d'entrée de mouvement (7) entraînant deux planétaires coaxiaux (8, 9) reliés aux arbres de roues (16, 17) du véhicule par l'intermédiaire de satellites (23), et supportés par des roulements (24) transmettant directement les efforts de réaction du mécanisme (3) au carter (4), caractérisé en ce que la couronne (7) est rapportée sur une pièce creuse (18) qui renferme au moins un axe de différentiel (22, 22a) et présente deux bras latéraux coaxiaux (19) perpendiculaires à son plan et supportant les planétaires (8, 9).

## Description

La présente invention se rapporte à un mécanisme de transmission différentiel, notamment pour train avant de véhicule tracté à groupe motopropulseur transversal, monté en sortie d'une boîte de vitesses.

Les mécanismes différentiels connus comportent un ensemble de planétaires et de satellites enfermés dans un boîtier, qui assure leur cohésion, en exerçant la réaction nécessaire à la transmission du couple entre ces éléments.

La publication EP 0 614 778, au nom de la demanderesse, décrit un mécanisme différentiel de ce type, comportant un boîtier fermé par un couvercle, sur lequel est fixée la couronne d'entrée du mouvement. Conformément aux dispositions habituelles dans ce type de mécanisme, le boîtier est monté dans des roulements en appui contre le carter de la transmission, de sorte que celui-ci assure la réaction nécessaire à la transmission du couple, en autorisant la rotation du boîtier de différentiel.

Pour augmenter la capacité d'un différentiel, il est connu d'augmenter le nombre de ses satellites. Cette solution a pour inconvénient de rendre le mécanisme plus complexe, et dans certain cas, d'imposer l'utilisation d'un boîtier en plusieurs parties.

La présente invention a pour but d'augmenter la capacité d'un mécanisme différentiel, tout en simplifiant sa structure.

Elle concerne un mécanisme de transmission différentiel comportant à l'intérieur d'un carter de transmission une couronne d'entrée de mouvement entraînant deux planétaires coaxiaux reliés aux arbres de roues du véhicule par l'intermédiaire de satellites. Ce mécanisme est caractérisé en ce que les planétaires sont supportés par des roulements transmettant directement les efforts de réaction du mécanisme au carter.

Selon un mode de réalisation préférentiel de l'invention, les roulements assurent l'immobilisation axiale des planétaires.

Pour assurer la liaison entre la couronne d'entrée et les planétaires, l'invention propose de monter la couronne sur une pièce creuse renfermant au moins un axe de différentiel.

D'autres caractéristiques et avantages de l'invention apparaîtront clairement à la lecture de la description suivante d'un mode de réalisation particulier de celle-ci, en se référant aux dessins annexés sur lesquels :

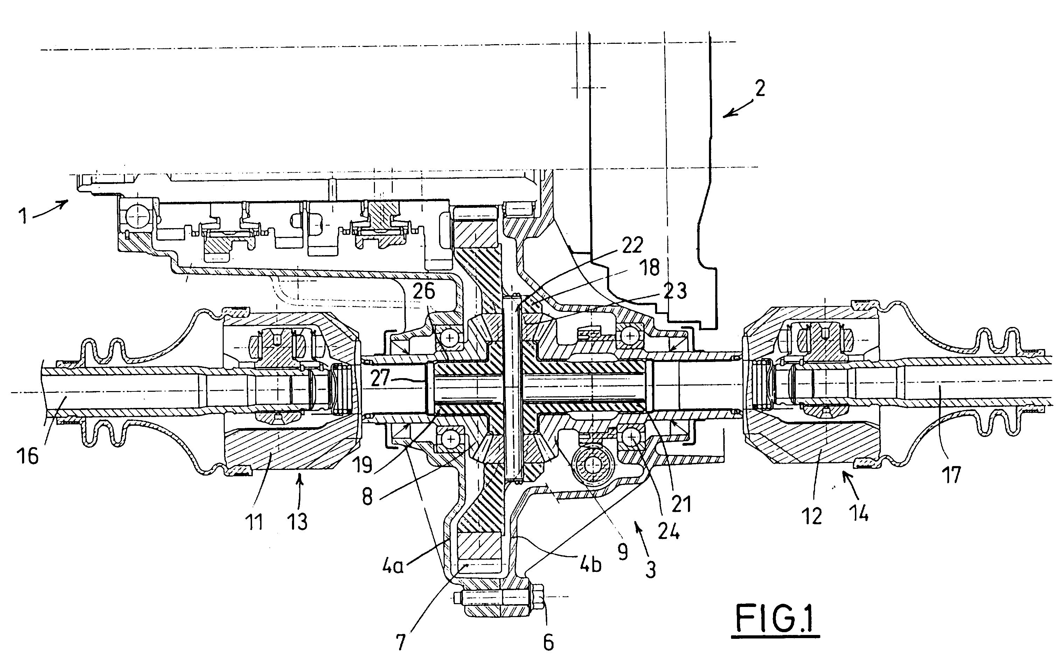

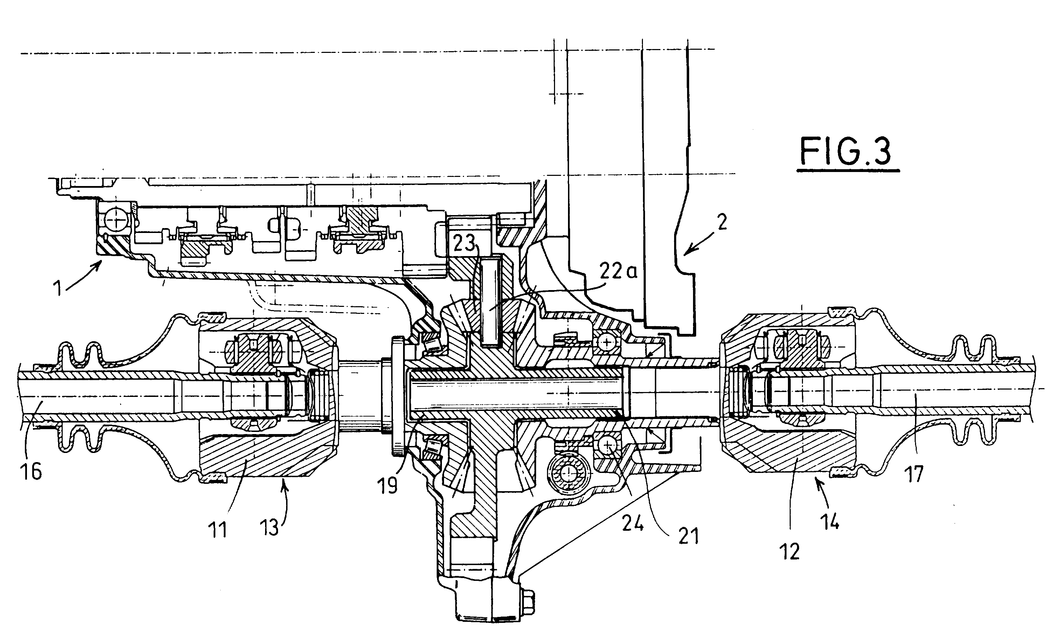

- les figures 1 à 3 illustrent le mécanisme de transmission différentiel proposé par l'invention.

Le dispositif de transmission représenté sur les figures 1 à 3 se compose d'une boîte de vitesses 1, dont seule la partie inférieure est représentée, et qui est associée au mécanisme différentiel 3, faisant l'objet de l'invention. La boîte de vitesses 1 et le mécanisme 3 sont logés à l'intérieur d'un même carter, ou carter de mécanisme, en deux parties 4a, 4b, réunies par des vis de fixation 6.

Le mécanisme différentiel 3 comporte de façon classique une couronne d'entrée de mouvement 7, qui entraîne deux planétaires 8, 9 solidaires d'un premier élément ou élément extérieur 11, 12 d'un joint de transmission homocinétique de type tripode 13, 14, qui transmet le mouvement aux arbres de roue 16, 17. Le mécanisme différentiel 3 ne comporte pas de boîtier, et la couronne 7 est rapportée sur une pièce 18 se présentant sous la forme d'une galette creuse verticale s'étendant perpendiculairement au plan de coupe des figures.

La pièce de support ou galette 18 présente deux bras ou jantes latérales coaxiales 19, 21 perpendiculaires à celle-ci en son centre, qui reçoivent les planétaires 8, 9. La figure 1 fait apparaître un axe de différentiel 22 s'étendant de part en part de la pièce 18, tandis que la figure 2 montre deux demi-axes 22a, 22b et que la figure 3 montre un seul demi-axe de différentiel 22a.

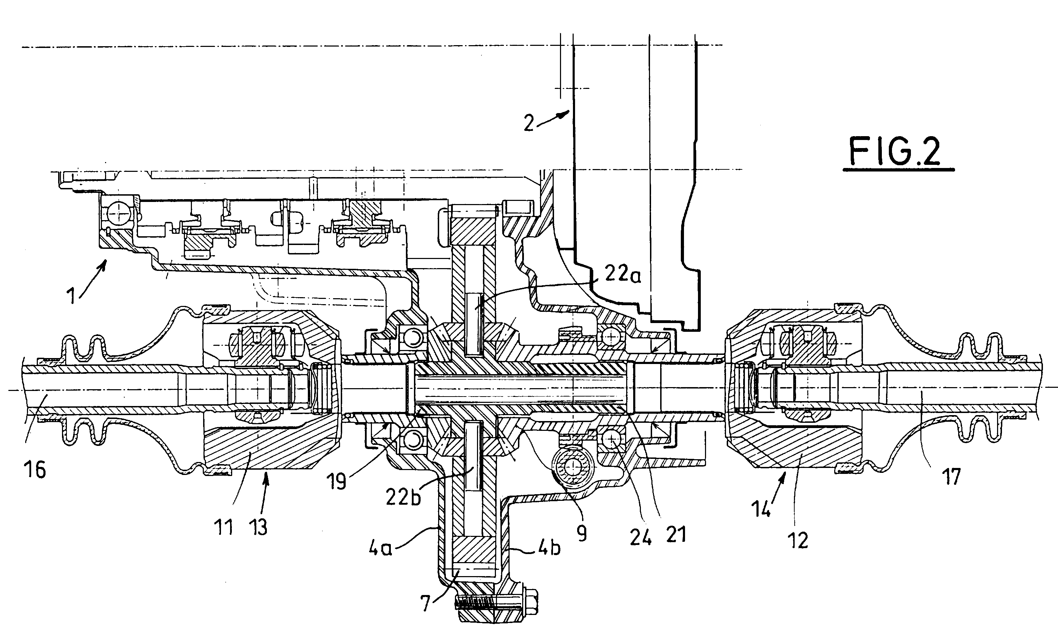

Le mécanisme différentiel 3 proposé par l'invention peut notamment ne comporter que deux satellites 23, montés sur un axe unique 22 conformément à la figure 1 ou sur deux demi-axes 22a, 22b conformément à la figure 2. Il peut également comporter un nombre différent de satellites 23 (par exemple trois, quatre ou six), en combinant les dispositions illustrées par les trois figures, pour disposer d'un ou plusieurs demi-axes 22a, 22b, de part et d'autre de l'axe 22 de la figure 1, à l'intérieur de la pièce 18.

Comme indiqué plus haut, dans un mécanisme différentiel, les différents éléments par lesquels le couple transite, dont les planétaires, ont tendance à s'écarter de leur support. Selon la disposition habituelle, ces efforts sont supportés par le boîtier du différentiel, qui assure la cohésion du mécanisme. Conformément à l'invention, le mécanisme 3 ne possède pas de boîtier, et les planétaires 8, 9 sont en appui contre le carter 4 par l'intermédiaire de roulements 24. En se reportant aux figures, on voit que les planétaires tournent à l'intérieur du carter 4 dans les roulements 24, et qu'ils sont arrêtés en translation sur les jantes, ou bras latéraux 21 par ces derniers. Les planétaires 8, 9 ayant tendance à s'écarter des jantes 21, les roulements 24 sont donc toujours en contrainte dans leur logement, tandis que des bagues intérieures 26 positionnent les planétaires 8, 9 par rapport aux satellites 23, de façon à réduire le jeu de denture entre ces éléments. Les bagues 26 peuvent notamment être remplacées par des roulements à aiguilles (non représentés) qui permettent d'éliminer toute traînée lorsque le mécanisme transmet des couples élevés, ou au contraire servir de limiteurs de glissement à faible charge, cette dernière disposition étant particulièrement appréciable, car elle permet de renvoyer le couple sur une roue en cas de patinage de l'autre roue.

Par ailleurs, l'absence de boîtier de différentiel permet d'écarter les satellites par rapport à l'axe de rotation des planétaires, ce qui augmente la charge transmissible par rapport aux différentiels connus, étant entendu que le passage du nombre de satellites à trois, quatre ou six, autorisé par l'invention permet de diminuer l'effort transmis par les dentures de chacun d'eux.

En conclusion, il faut souligner que le faible encombrement du mécanisme de transmission différentiel proposé par l'invention se traduit par la possibilité d'augmenter le diamètre de l'embrayage, donc le couple pouvant transiter par l'ensemble de la transmission, dans des proportions non négligeables. En dernier lieu, on notera que la disposition d'opercules 27 à l'extrémité des jantes 21 et à l'intérieur des planétaires 8, 9 assure l'étanchéité de carter de transmission 4 avant le montage des arbres de roues.

## Revendications

1. Mécanisme de transmission différentiel (3) comportant à l'intérieur d'un carter de transmission (4) une couronne d'entrée de mouvement (7) entraînant deux planétaires coaxiaux (8, 9) reliés aux arbres de roues (16, 17) du véhicule par l'intermédiaire de satellites (23), et supportés par des roulements (24) transmettant directement les efforts de réaction du mécanisme (3) au carter (4), caractérisé en ce que la couronne (7) est rapportée sur une pièce creuse (18) qui renferme au moins un axe de différentiel (22, 22a) et présente deux bras latéraux coaxiaux (19) perpendiculaires à son plan et supportant les planétaires (8, 9).

2. Mécanisme de transmission selon la revendication 1, caractérisé en ce que les roulements (24) assurent l'immobilisation axiale des planétaires (8, 9).

3. Mécanisme de transmission selon la revendication 1 ou 2, caractérisé en ce que la pièce (18) a une forme de galette creuse

4. Mécanisme de transmission selon la revendication 1, 2 ou 3, caractérisé en ce que les planétaires (8, 9) sont montés sur les bras (19, 21) autour de bagues (26).

5. Mécanisme de transmission selon l'une des revendications précédentes, caractérisé en ce que les planétaires (8, 9) sont montés sur les bras (19, 21) par l'intermédiaire de roulements à aiguilles.

6. Mécanisme de transmission selon l'une des revendications précédentes, caractérisé en ce que la pièce (18) renferme un axe de différentiel (22) et un ou plusieurs demi-axes de différentiel (22a, 22b).
